# EUROPEAN PATENT APPLICATION

(11) **EP 4 852 527 A1**
(43) Date of publication of application: **09.12.2026**
(21) Application number: 24923264.6
(22) Date of filing: 22.08.2024
(51) Int. Cl.: H04W 52/02

(54) **COMMON SIGNAL TRANSMISSION METHOD, STORAGE MEDIUM AND ELECTRONIC DEVICE**

(30) Priority: 07.02.2024 CN 202410174869
(71) Applicant: ZTE CORPORATION, Shenzhen, Guangdong 518057 (CN)
(72) Inventor: MA, Xuan, Shenzhen, Guangdong 518057 (CN); CHEN, Mengzhu, Shenzhen, Guangdong 518057 (CN); DAI, Jianqiang, Shenzhen, Guangdong 518057 (CN); DAI, Bo, Shenzhen, Guangdong 518057 (CN); XU, Jun, Shenzhen, Guangdong 518057 (CN); XU, Jiajun, Shenzhen, Guangdong 518057 (CN)
(74) Representative: Vossius & Partner Patentanwälte Rechtsanwälte mbB
(86) International application number: PCT/CN2024/114009
(87) International publication number: WO 2025/167054

(57) **Abstract**

Embodiments of the present disclosure provide a common signal transmission method, a storage medium, and an electronic apparatus. The method includes: determining, according to a first condition, whether a first cell is an energy-saving cell; and transmitting by a first node, in a case where the first cell is the energy-saving cell, a WUS to a second node corresponding to the first cell to trigger the second node to perform common signal transmission.

## Description

### CROSS-REFERENCE TO RELATED APPLICATION(S)

This application claims priority to Chinese patent application No. CN202410174869.1, entitled "COMMON SIGNAL TRANSMISSION METHOD, STORAGE MEDIUM, AND ELECTRONIC APPARATUS", filed on February 7, 2024, the entire contents of which are incorporated herein by reference.

### FIELD

Embodiments of the present disclosure relate to the field of communication, and specifically, to a common signal transmission method, a storage medium, and an electronic apparatus.

### BACKGROUND

With the continuous growth of wireless services and expanding network scales, energy consumption of devices keeps rising. High power consumption of base stations has become one of the main reasons for the persistently high operating expense (OPEX). How to reduce the energy consumption of communication networks, achieve green, efficient, and sustainable development, and meet requirements of communication network development and network operation has become an urgent problem to be solved. For the base stations, the transmission of certain common signals, such as synchronization signal block (SSB) transmission or system information block (SIB) transmission, accounts for a large proportion of base station power consumption. Therefore, converting periodic transmission of the common signals into on-demand transmission serves as an important measure for base station energy saving. However, in the related art, there is no effective solution to identify whether a first cell is an energy-saving cell and perform on-demand transmission of the common signals on the basis of identifying the first cell as the energy-saving cell.

### SUMMARY

According to an embodiment of the present disclosure, a common signal transmission method is provided and applied to a first node. The method includes: determining, according to a first condition, whether a first cell is an energy-saving cell; and transmitting by the first node, in a case where the first cell is the energy-saving cell, an uplink wake up signal (WUS) to a second node corresponding to the first cell to trigger the second node to perform common signal transmission.

According to an embodiment of the present disclosure, a common signal transmission method is provided and applied to a second node. The method includes: transmitting and/or configuring a first condition, the first condition being configured to determine whether a first cell is an energy-saving cell; and receiving an uplink wake up signal (WUS) from a first node in a case where the first cell is the energy-saving cell, the WUS being configured to trigger the second node to perform common signal transmission.

According to another embodiment of the present disclosure, a computer-readable storage medium is further provided and has a computer program stored therein, where the computer program is configured to perform the steps in any one of the foregoing method embodiments during operation.

According to another embodiment of the present disclosure, an electronic apparatus is further provided, and includes a memory and a processor. The memory has a computer program stored therein, and the processor is configured to run the computer program so as to perform the steps in any one of the foregoing method embodiments.

### BRIEF DESCRIPTION OF THE DRAWINGS

FIG. 1 is a block diagram of a hardware structure of a mobile terminal of a common signal transmission method according to an embodiment of the present disclosure;
FIG. 2 is a flowchart of a common signal transmission method according to an embodiment of the present disclosure;
FIG. 3 is a flowchart of a common signal transmission method according to an embodiment of the present disclosure;
FIG. 4 is a flowchart of a common signal transmission method according to another embodiment of the present disclosure;
FIG. 5 is a flowchart of a common signal transmission method according to yet another embodiment of the present disclosure;
FIG. 6 is a flowchart of a common signal transmission method according to Embodiment 1 of the present disclosure;
FIG. 7 is a flowchart of a common signal transmission method according to Embodiment 4 of the present disclosure; and
FIG. 8 is a flowchart of a common signal transmission method according to Embodiment 5 of the present disclosure.

### DETAILED DESCRIPTION OF EMBODIMENTS

Embodiments of the present disclosure are described in detail with reference to the accompanying drawings and in conjunction with embodiments as below.

It should be noted that the terms such as "first" and "second" of the specification and claims of the embodiments of the present disclosure, as well as the foregoing accompanying drawings are used to distinguish similar objects but are not necessarily intended to describe specific sequences or precedence orders.

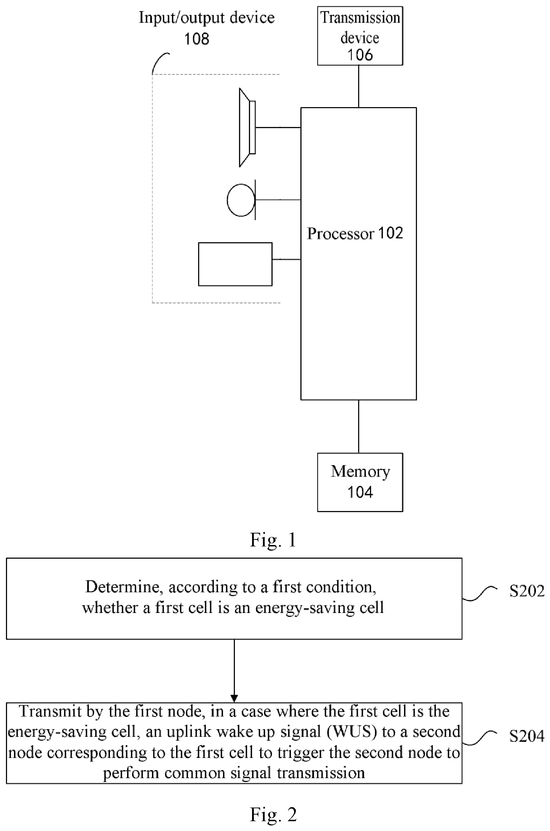

The method embodiments provided by the embodiments of this application may be performed in a mobile terminal, a computer terminal, or a similar arithmetic unit. Taking operation on the mobile terminal as an example, FIG. 1 is a block diagram of a hardware structure of a mobile terminal of a common signal transmission method according to an embodiment of the present disclosure. As shown in FIG. 1, the mobile terminal may include one or more (only one is shown in FIG. 1) processors 102 (the processor 102 may include, but is not limited to, a microcontroller unit (MCU) or a field-programmable gate array (FPGA), or another processing apparatus) and a memory 104 for storing data, where the mobile terminal may also include a transmission device 106 for a communication function and an input and output device 108.Those of ordinary skill in the art may understand that the structure shown in FIG. 1 is merely illustrative, and does not limit the structure of the foregoing mobile terminal. For example, the mobile terminal may further include more or fewer components than those shown in FIG. 1, or have a different configuration from that shown in FIG. 1.

The memory 104 may be configured to store computer programs, for example, software programs and modules of application software, such as computer programs corresponding to the common signal transmission method in the embodiments of the present disclosure. The processor 102 performs various functional applications and data processing by operating the computer programs stored in the memory 104, thereby implementing the foregoing method. The memory 104 may include a high-speed random access memory, and may further include a nonvolatile memory, such as one or more magnetic storage apparatuses, flash memories, or other nonvolatile solid state memories. In some examples, the memory 104 may further include memories which are remotely disposed relative to the processor 102, and these remote memories may be connected to the mobile terminal through a network. Examples of the foregoing network include, but are not limited to, an Internet, an intranet, a local area network, a mobile communication network, and a combination thereof.

The transmission device 106 is configured to receive or transmit data via a network. The foregoing network example may include a wireless network provided by a communication operator of the mobile terminal. In an example, the transmission device 106 includes a network interface controller (NIC), which may be connected with other network devices through a base station so as to communicate with the Internet. In an example, the transmission device 106 may be a radio frequency (RF) module, configured to communicate with the Internet in a wireless manner.

An embodiment of the present disclosure provides a common signal transmission method, applied to a first node. FIG. 2 is a flowchart of a common signal transmission method according to an embodiment of the present disclosure. As shown in FIG. 2, the process includes the following steps:
Step S202: Determine, according to a first condition, whether a first cell is an energy-saving cell.

In this embodiment of the present disclosure, the first node may be a terminal. The terminal may be sometimes referred to as a user, user equipment (UE), an access terminal, a UE unit, a UE station, a mobile station, a mobile platform, a remote station, a remote terminal, a mobile device, a UE terminal, a wireless communication device, a UE agent, a UE apparatus, or the like. The embodiments of the present disclosure do not limit this.

In this embodiment of the present disclosure, the UE may perform, according to the first condition, energy-saving cell identification, and may also perform carrier identification according to the first condition.

In an exemplary embodiment, a common signal includes at least one of: a system information block (SIB) or a synchronization signal block (SSB).

In an exemplary embodiment, the SIB is carried in a first physical downlink shared channel (PDSCH). The first PDSCH is associated with a first demodulation reference signal (DMRS) and scheduled by a first physical downlink control channel (PDCCH). The first PDCCH is associated with a second DMRS and/or the SSB, and the first DMRS has a quasi-co-location relationship with the second DMRS and/or the SSB.

In this embodiment of the present disclosure, the system information block (SIB) may be a first system information block (SIB1). That is, in this embodiment of the present disclosure, the system information block (SIB) includes an SIB1 and other system information blocks (SIBs other than SIB1, OSI).

In an exemplary embodiment, the first condition includes at least one of: a bit value of a reserved field in a master information block (MIB) of the first cell; a subcarrier offset value of the SSB in the MIB of the first cell; whether the first node detects an SIB or SIB scheduling information in the first cell within a first preset time period; whether the first cell is associated with an energy-saving cell identity; whether the first cell is associated with an energy-saving cell list; or whether the first cell is configured with configuration information of an uplink wake up signal (WUS).

In this embodiment of the present disclosure, the first condition is determined by MIB information, and the MIB information includes at least one of: the bit value of the reserved field in the MIB, or the subcarrier offset value of the SSB in the MIB.

In an exemplary embodiment, the bit value of the reserved field in the MIB of the first cell is configured to indicate at least one of: whether the first cell is the energy-saving cell; whether the first cell is in an on-demand transmission state; or whether the first cell allows the first node to camp thereon.

In this embodiment of the present disclosure, a length of the reserved field is 1 bit. The bit value of the reserved field is not limited, and may be 0 or 1.

In an exemplary embodiment, the subcarrier offset value of the SSB in the MIB of the first cell includes at least one of: in a case where the subcarrier offset value in the MIB for a first frequency range is equal to 30, or the subcarrier offset value in the MIB for a second frequency range is equal to 14, the first cell is the energy-saving cell; in a case where the subcarrier offset value in the MIB for the first frequency range is less than 24, or the subcarrier offset value in the MIB for the second frequency range is less than 12, a control resource set zero exists; and in a case where the subcarrier offset value in the MIB for the first frequency range is greater than 23 and less than 30, or the subcarrier offset value in the MIB for the second frequency range is equal to 12 or 13, the control resource set zero does not exist.

In an exemplary embodiment, the first preset time period is determined according to at least one of: a predefined time period; a time period configured by a radio resource control (RRC) parameter; a time period determined according to a communication capability or a device type of the first node; or a time period determined by the first node.

In an exemplary embodiment, that the first node determines whether the first cell is the energy-saving cell includes: determining, by the first node, that the first cell is the energy-saving cell in a case where the subcarrier offset value of the SSB in the MIB of the first cell indicates that the control resource set zero exists and the first node fails to detect the SIB or SIB scheduling information within the first preset time period.

In an exemplary embodiment, the energy-saving cell identity or the energy-saving cell list is configured by at least one of: master information block (MIB) information; system information block (SIB) information; radio resource control (RRC) signaling; a core network; or non-access stratum (NAS) control information.

Step S204: Transmit by the first node, in a case where the first cell is the energy-saving cell, an uplink wake up signal (WUS) to a second node corresponding to the first cell to trigger the second node to perform common signal transmission.

In an exemplary embodiment, the uplink wake up signal (WUS) is further configured to trigger the second node to update the synchronization signal block (SSB) or update a transmission mode of the synchronization signal block (SSB).

After the first node transmits the uplink wake up signal (WUS) to the second node corresponding to the first cell, the common signal transmission method further includes at least one of: detecting, by the first node, the system information block (SIB) on the first cell within a second preset time period; or detecting, by the first node, the synchronization signal block (SSB) on the first cell.

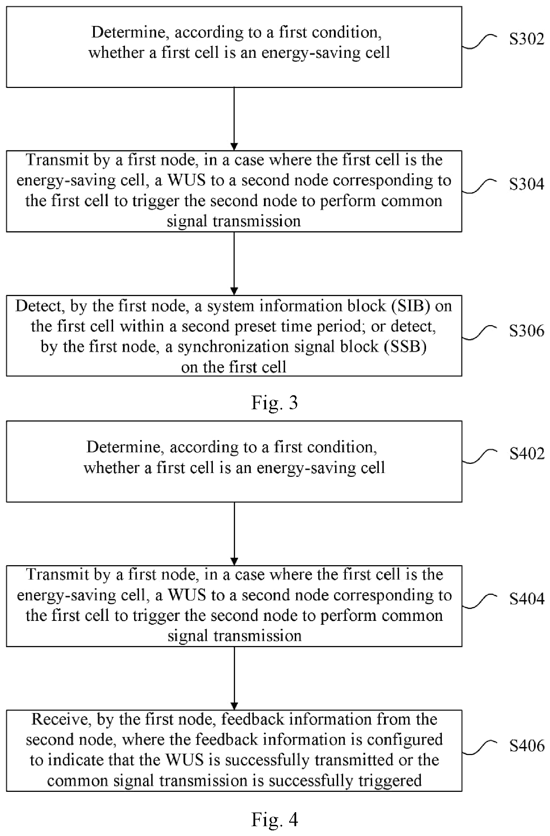

FIG. 3 is a flowchart of a common signal transmission method according to an embodiment of the present disclosure. As shown in FIG. 3, the method includes the following steps:
Step S302: Determine, according to a first condition, whether a first cell is an energy-saving cell.
Step S304: Transmit by a first node, in a case where the first cell is the energy-saving cell, a WUS to a second node corresponding to the first cell to trigger the second node to perform common signal transmission.
Step S306: Detect, by the first node, a system information block (SIB) on the first cell within a second preset time period; or detect, by the first node, a synchronization signal block (SSB) on the first cell.

In an exemplary embodiment, the first node re-transmits the WUS to the second node in a case where the first node fails to detect a SIB within the second preset time period.

In this embodiment of the present disclosure, the terminal continuously detects an SIB1 within the second preset time period. In this embodiment of the present disclosure, the terminal stops further detection of a SIB1 after detecting a SIB1 within the second preset time period.

In an exemplary embodiment, a start time point of the second preset time period includes at least one of: a time point when the first node completes transmission of the WUS to the second node; or a time point upon expiration of a third preset time period following transmission completion of the WUS by the first node.

In an exemplary embodiment, the third preset time period is determined according to at least one of: a predefined time period, a time period configured by radio resource control signaling, a time period corresponding to an interval from a time point of transmission completion of the WUS to a time point of completion of reception of an N-th SSB, or a time period corresponding to a duration of N SSB transmission cycles, where N is a positive integer.

In an exemplary embodiment, the second preset time period is determined according to at least one of: a predefined time period; a duration of M SIB cycles; or a duration of M SIB repetition cycles, where M is a positive integer.

In an exemplary embodiment, after the first node transmits the uplink wake up signal (WUS) to the second node corresponding to the first cell, the common signal transmission method further includes: receiving, by the first node, feedback information from the second node, where the feedback information is configured to indicate that the WUS is successfully transmitted or the common signal transmission is successfully triggered.

FIG. 4 is a flowchart of a common signal transmission method according to another embodiment of the present disclosure. As shown in FIG. 4, the method includes the following steps:
Step S402: Determine, according to a first condition, whether a first cell is an energy-saving cell.
Step S404: Transmit by a first node, in a case where the first cell is the energy-saving cell, a WUS to a second node corresponding to the first cell to trigger the second node to perform common signal transmission.
Step S406: Receive, by the first node, feedback information from the second node, where the feedback information is configured to indicate that the WUS is successfully transmitted or the common signal transmission is successfully triggered.

In an exemplary embodiment, the feedback information is carried in a master information block (MIB) of the first cell.

In an exemplary embodiment, the feedback information is carried in a reserved field of the MIB; or, the feedback information is carried in a subcarrier offset value of the MIB.

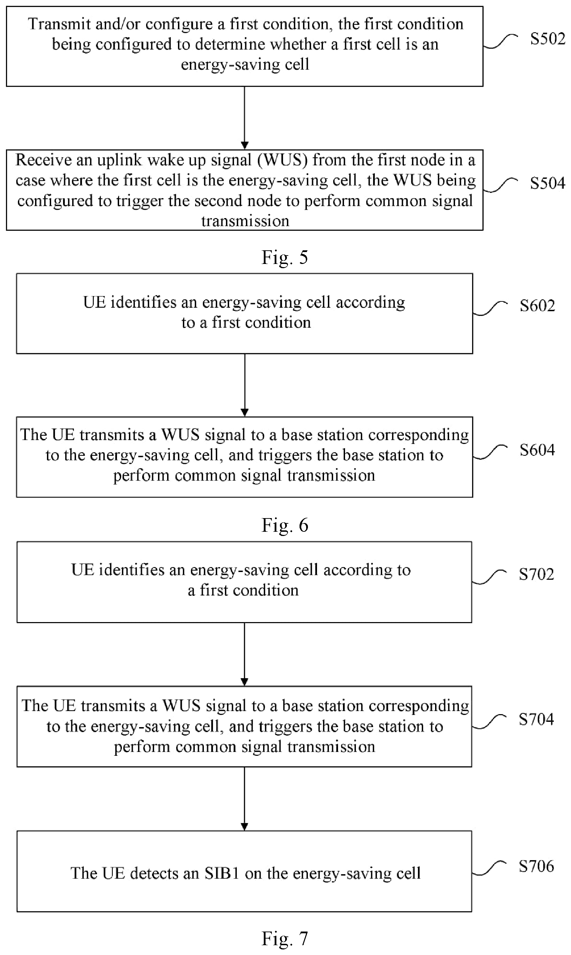

An embodiment of the present disclosure further provides a common signal transmission method, applied to a second node. FIG. 5 is a flowchart of a common signal transmission method according to yet another embodiment of the present disclosure. The method includes the following steps:
Step S502: Transmit and/or configure a first condition, the first condition being configured to determine whether a first cell is an energy-saving cell.

In this embodiment of the present disclosure, the second node may be a base station. The base station may be a base station in long term evolution (LTE) or long term evolution advanced (LTE-A) or an evolutional node B (eNB or eNodeB), a base station device in 5G networks, a base station in future communication systems, or the like. The base station may include various network-side devices such as various macro base stations, micro base stations, home base stations, remote radio units, reconfigurable intelligent surfaces (RISs), routers, and wireless fidelity (WIFI) devices.

Step S504: Receive an uplink wake up signal (WUS) from the first node in a case where the first cell is the energy-saving cell, the WUS being configured to trigger the second node to perform common signal transmission.

In an exemplary embodiment, a common signal includes at least one of: a system information block (SIB) or a synchronization signal block (SSB).

In an exemplary embodiment, the WUS is further configured to trigger the second node to update the synchronization signal block (SSB) or update a transmission mode of the synchronization signal block (SSB).

In an exemplary embodiment, after step S504, the method further includes: transmitting, by the second node, feedback information to the first node, where the feedback information is configured to indicate that the WUS is successfully transmitted or the common signal transmission is successfully triggered.

Through the foregoing steps, the common signal transmission method is provided. Whether the first cell is the energy-saving cell is determined according to the first condition; and in the case where the first cell is the energy-saving cell, the first node transmits the WUS to the second node corresponding to the first cell, to trigger the second node to perform common signal transmission. Problems in the related art that it is impossible to identify whether the first cell is the energy-saving cell and perform on-demand common signal transmission on the basis of identifying the first cell as the energy-saving cell are solved, and effects of effectively identifying the energy-saving cell and performing on-demand common signal transmission are achieved.

According to the descriptions of the foregoing implementations, those skilled in the art may clearly know that the method according to the foregoing embodiments may be implemented by software and a necessary general-purpose hardware platform, and certainly, may also be implemented by hardware, but the former is a preferred implementation in many cases. Based on such an understanding, the technical solutions of the embodiments of the present disclosure essentially or parts making contribution to the prior art may be embodied in the form of a software product. The computer software product is stored in a storage medium (e.g., a ROM/RAM, a magnetic disk, or a compact disc), which includes a plurality of instructions configured for allowing one terminal device (which may be a mobile phone, a computer, a server, a network device, or the like) to perform the method according to various embodiments of the present disclosure.

An embodiment further provides a common signal transmission apparatus. The transmission apparatus is configured to implement the foregoing embodiments and preferred implementations, and details that have been described are not repeated. As used below, the term "module" may be a combination of software and/or hardware implementing predetermined functions. An apparatus described in the following embodiments is preferably implemented by software, but it is possible and conceivable for implementing the apparatus through the hardware or a combination of software and hardware.

The common signal transmission apparatus provided by this embodiment of the present disclosure may be disposed in or applied to a terminal or a base station. The common signal transmission apparatus may include: a determination module, configured to determine, according to a first condition, whether a first cell is an energy-saving cell; and a transmission module, configured to transmit, in a case where the first cell is the energy-saving cell, an uplink wake up signal (WUS) to a second node corresponding to the first cell to trigger the second node to perform common signal transmission. In this embodiment of the present disclosure, a naming method and function division for each module of the foregoing common signal transmission apparatus may be determined according to actual situations, which are not specifically limited herein, as long as the steps of the foregoing common signal transmission method can be implemented.

It should be noted that the foregoing modules may be implemented through software or hardware, and for the latter, the modules may be implemented by following methods including but not limited to: the foregoing modules are all located in the same processor; or the foregoing modules are respectively located in different processors in the form of any combination.

An embodiment of the present disclosure further provides a computer-readable storage medium. The computer-readable storage medium has a computer program stored therein. The computer program is configured to perform the steps in any one of the foregoing method embodiments during operation.

In an exemplary embodiment, the foregoing computer-readable storage medium may include, but is not limited to: a U disk, a read-only memory (ROM), a random access memory (RAM), a mobile hard disk, a magnetic disk, a compact disc, or other media capable of storing computer programs.

An embodiment of the present disclosure further provides an electronic apparatus including a memory and a processor. The memory has a computer program stored therein, and the processor is configured to run the computer program so as to perform the steps in any one of the foregoing method embodiments.

In an exemplary embodiment, the foregoing electronic apparatus may further include a transmission device and an input/output device. The transmission device is connected with the foregoing processor, and the input/output device is connected with the foregoing processor.

For this embodiment, reference may be made to the examples described in the foregoing embodiments and exemplary implementations, and details are not repeated herein.

Apparently, those skilled in the art should understand that the modules or the steps in the embodiments of the present disclosure described above may be implemented through a general-purpose computing apparatus, may be centralized on a single computing apparatus or distributed on a network formed by a plurality of computing apparatuses, may be implemented using program code executable by the computing apparatus, and accordingly, may be stored in a storage apparatus for execution by the computing apparatus. In some cases, the steps shown or described may be performed in an order different from that presented herein, or may be made to integrated circuit modules, or a plurality of modules or steps among them may be made to a single integrated circuit module for implementation. Therefore, the embodiments of the present disclosure are not limited to any specific hardware and software combination.

To enable those skilled in the art to better understand the technical solutions of the embodiments of the present disclosure, the following description is given in conjunction with different scenario embodiments.

### Embodiment 1

Embodiment 1 provides a common signal transmission method. In Embodiment 1, a terminal UE and a base station are used to describe the common signal transmission method. FIG. 6 is a flowchart of a common signal transmission method according to Embodiment 1 of the present disclosure. As shown in FIG. 6, the method includes the following steps:
Step S602: The UE identifies an energy-saving cell according to a first condition.
   In this embodiment of the present disclosure, the UE may perform, according to the first condition, energy-saving cell identification, and may also perform carrier identification according to the first condition.
Step S604: The UE transmits a WUS signal to a base station corresponding to the energy-saving cell, and triggers the base station to perform common signal transmission.

In this embodiment of the present disclosure, the WUS signal transmitted by the UE to the base station is configured for at least one of: triggering transmission of a system information block (SIB) on the energy-saving cell; triggering transmission of a synchronization signal block (SSB) on the energy-saving cell; indicating an update of the SSB on the energy-saving cell; or indicating an update of a transmission mode of the SSB on the energy-saving cell.

In this embodiment of the present disclosure, a type of the energy-saving cell is at least one of: a cell supporting on-demand system information block (On-Demand SIB) transmission; a cell in a cell off state; or a cell supporting synchronization signal block adaptation (SSB Adaptation).

In this embodiment of the present disclosure, the synchronization signal block includes an SIB1 and/ or OSI.

In this embodiment of the present disclosure, the first condition includes at least one of: MIB information; whether the UE detects a SIB or downlink control information scheduling SIB information within a first preset time period; an energy-saving cell identity; an energy-saving cell list; or an uplink wake up signal configuration.

The MIB information includes at least one of: a bit value of a reserved field in the MIB, or a subcarrier offset value of a SSB in the MIB.

In this embodiment of the present disclosure, a reserved field with a length of one bit in the MIB is adopted to indicate whether the current cell is the energy-saving cell. In a practical implementation process, a bit value "T" of one bit in the MIB indicates that the current cell is the energy-saving cell, or the current cell is in an on-demand SIB1 transmission state, or the current cell allows the UE to camp thereon. A bit value "R" of one bit in the MIB indicates that the current cell is a non-energy-saving cell, or does not support on-demand SIB1 output, or is in a normal SIB1 transmission state, or the current cell has SIB1 transmission. In a practical implementation process, values of "T" and "R" are not limited, which may be T =1, and R =0; or T =0, and R =1.

In this embodiment of the present disclosure, the subcarrier offset value of the SSB in the MIB, namely k_{SSB}, includes a value range of 0 to 31 for a frequency range 1 (FR1) and a value of 0 to 15 for a frequency range 2 (FR2).

In the related art, the UE detects a synchronization signal/physical broadcast channel block (SS/PBCH block), and determines a control resource set for a type 0 downlink control channel common search space set (CORESET for Type0-PDCCH CSS set) according to the master information block (MIB) in the synchronization signal block, that is, whether the control resource set zero is present. If k_{SSB} < 24 in the MIB for FR1 and k_{SSB} < 12 in the MIB for FR2, it is considered that the control resource set zero exists. If k_{SSB} > 23 for FR1, or k_{SSB} > 11 for FR2, it is considered that the control resource set zero does not exist. When 24 ≤ k_{SSB} ≤ 29 for FR1, or 12 ≤ k_{SSB} ≤ 13 for FR2, the UE searches for a second SSB according to a mapping relationship. If k_{SSB} = 30 for FR1, or k_{SSB} = 14 for FR2, a reserved state is present.

In this embodiment of the present disclosure, regarding the subcarrier offset value of the SSB in the MIB, the UE determines, according to the subcarrier offset value of the SSB in the MIB, whether the control resource set zero (CORESET 0) exists.

When k_{SSB} < 24 for FR1 and k_{SSB} < 12 for FR2, CORESET 0 is considered to exist. When k_{SSB} > 23for FR1 or k_{SSB} > 11 for FR2, CORESET 0 is considered to not exist.

In this embodiment of the present disclosure, the UE determines, according to the subcarrier offset value of the SSB in the MIB, whether the current cell is the energy-saving cell. When k_{SSB} = 30 for FR1, or k_{SSB} = 14 for FR2, the current cell is the energy-saving cell.

In this embodiment of the present disclosure, the UE determines a current cell state according to one bit in the MIB and whether CORESET 0 exists. The current cell state includes whether it is an energy-saving cell; whether on-demand SIB1 transmission is supported; or whether SIB1 transmission exists.

In a practical implementation process, the UE detects an SS/PBCH block of a first cell, determines a bit value in the MIB indicating whether the first cell is the energy-saving cell, as well as whether CORESET 0 exists in the first cell. In an embodiment, when one bit in the MIB indicates that the first cell is the energy-saving cell, and CORESET 0 exists in the first cell, the first cell currently has SIB1 transmission. The UE detects and identifies, according to CORESET 0 and a common search space (search space0), downlink control information DCI 1_0 scrambled with a system information radio network temporary identifier (SI-RNTI) for scheduling system information. In an embodiment, when one bit in the MIB indicates that the first cell is the energy-saving cell, and CORESET 0 does not exist in the first cell, the first cell currently has no SIB1 transmission. In this case, SIB1 transmission of the current cell needs to be triggered through an uplink wake up signal (WUS). In an embodiment, when one bit in the MIB indicates that the first cell is a non-energy-saving cell, the UE determines whether to detect/receive the SIB1 according to whether CORESET 0 exists.

In Embodiment 1, a case where the first condition is the MIB information is described.

### Embodiment 2

In Embodiment 2, a case where the first condition is whether the UE detects a SIB or downlink control information scheduling SIB information within a first preset time period is described.

In this embodiment of the present disclosure, the UE detects whether the SIB or SIB scheduling information exists in a current cell within the first preset time period. The first preset time period is determined by at least one of: predefinition, high-layer parameters, a terminal capability, a terminal type, or UE decision.

In this embodiment of the present disclosure, for a case where the first preset time period is predefined, in an embodiment, a minimum duration is predefined, which is a duration for the terminal to at least detect the SIB1.

In an embodiment, the predefined duration is N SIB1 repetition cycles, where N ≥1. For example, N is a predefined value or configured by a high-layer parameter, or obtained from a configuration table. For example, when N =4 and the SIB1 repetition cycle is 20 ms, the predefined duration is 80 ms, where N is a positive integer.

In an embodiment, the predefined duration is N SIB1 cycles, where N ≥1. For example, N is a predefined value or configured by a high-layer parameter, or obtained from a configuration table. For example, when N =2 and the SIB1 cycle is 160 ms, the predefined duration is 320 ms,

In an embodiment, the predefined duration is N SSB transmission cycles, where N ≥1. For example, N is a predefined value or configured by a high-layer parameter, or obtained from a configuration table. For example, when N =8 and the SSB cycle is 20 ms, the predefined duration is 160 ms,

In an embodiment, the predefined duration is T milliseconds, where T ≥ 0. For example, the predefined duration is 100 ms.

In this embodiment of the present disclosure, in a case where the first preset time period is determined by a high-layer parameter, the first preset time period is configured by a the high-layer parameter. In an embodiment, a high-layer parameter directly configures a duration of the first preset time period. For example, a high-layer parameter configures values for one or more candidate first preset time periods.

In this embodiment of the present disclosure, in a case where the first preset time period is determined by the terminal capability or the terminal type, the first preset time period is determined by the terminal capability or the terminal type. For example, the first preset time period for a first-type terminal or a terminal with a first terminal capability is T1, and the first preset time period for a second-type terminal or a terminal with a second terminal capability is T2, where T1 and/or T2 depend on high-layer configuration, predefinition, or UE decision.

In this embodiment of the present disclosure, in a case where the first preset time period is determined by the UE, the first preset time period is directly decided by the UE.

In Embodiment 2, if the UE fails to detect the SIB or downlink control information scheduling SIB information on the first cell within the first preset time period, the first cell is considered to be the energy-saving cell.

In this embodiment of the present disclosure, the UE detects the synchronization signal/broadcast channel block of the first cell, and determines, according to the MIB, that CORESET 0 exists in the first cell; and the UE fails to detect the SIB or downlink control information scheduling SIB information, that is, DCI 1_0 scrambled with SI-RNTI, within the first preset time period, the first cell is the energy-saving cell. Otherwise, the first cell is the non-energy-saving cell.

### Embodiment 3

In Embodiment 3, cases where the first condition is whether a current cell carries an energy-saving cell identity, whether the current cell is associated with an energy-saving cell list, and whether the current cell is configured with an uplink wake up signal (WUS) are described.

In this embodiment of the present disclosure, the energy-saving cell identity or the energy-saving cell list is configured by at least one of: an MIB; an SIB1; radio resource control (RRC); a core network; or a non-access stratum (NAS).

In this embodiment of the present disclosure, the energy-saving cell identity is associated with a physical cell identity (PCI), a cell identity, a cell index, or a serving cell ID.

In an embodiment, if the first cell is associated with the energy-saving cell identity, the first cell is the energy-saving cell. If the energy-saving cell is not associated with the energy-saving cell identity, the energy-saving cell is a non-energy-saving cell.

In an embodiment, if the first cell is associated with the energy-saving cell list, the first cell is the energy-saving cell. For example, if the energy-saving cell list includes a plurality of cells, and the first cell is one of the plurality of cells included in the energy-saving cell list, the first cell is the energy-saving cell.

In an embodiment, the energy-saving cell identity is associated with one cell list. For example, the cell list includes one or more cells, where each cell corresponds to one energy-saving cell identity. When the energy-saving cell identity indicates energy saving, the cell corresponding to the energy-saving cell identity is the energy-saving cell. When the energy-saving cell identity indicates non-energy-saving, the cell corresponding to the energy-saving cell identity is the non-energy-saving cell.

In another embodiment, the energy-saving cell identity is associated with one energy-saving cell list, and the energy-saving cell list includes one or more cells. Each cell corresponds to one physical cell identity or cell identity. For example, the cell contained in the energy-saving cell list associated with the energy-saving cell identity is the energy-saving cell. For example, the cell corresponding to the physical cell identity or cell identity associated with the energy-saving cell list is the energy-saving cell. The cell associated with the energy-saving cell identity is the energy-saving cell, and the cell not associated with the energy-saving cell identity is the non-energy-saving cell.

In a practical implementation process, a terminal accesses the first cell and acquires the energy-saving cell list in the first cell, where each cell is associated with one physical cell identity. When the terminal accesses a second cell, the terminal detects an SSB of the second cell and acquires a physical cell identity of the second cell, and determines that the second cell is the energy-saving cell after determining, according to the physical cell identity, that the second cell is included in the energy-saving cell list.

In this embodiment of the present disclosure, in a case where the first condition is whether the current cell is configured with the uplink wake up signal (WUS), the cell associated with the uplink wake up signal configuration is the energy-saving cell, and the cell not associated with the uplink wake up signal configuration is the non-energy-saving cell.

### Embodiment 4

Embodiment 4 provides a common signal transmission method. In Embodiment 4, a terminal UE and a base station are used to describe the common signal transmission method. Steps after the UE transmits a WUS signal to the base station corresponding to an energy-saving cell are described. FIG. 7 is a flowchart of a common signal transmission method according to an embodiment of the present disclosure. As shown in FIG. 7, the method includes the following steps:
Step S702: The UE identifies an energy-saving cell according to a first condition.
   In this embodiment of the present disclosure, the UE may perform, according to the first condition, energy-saving cell identification, and may also perform carrier identification according to the first condition.
Step S704: The UE transmits a WUS signal to a base station corresponding to the energy-saving cell, and triggers the base station to perform common signal transmission.
   In this embodiment of the present disclosure, the terminal UE identifies the energy-saving cell and transmits the uplink wake up signal on the energy-saving cell, and the uplink wake up signal includes a SIB1 transmission request on the energy-saving cell. The uplink wake up signal is configured to trigger SIB1 transmission of the energy-saving cell.
Step S706: The UE detects an SIB1 on the energy-saving cell.

In this embodiment of the present disclosure, the terminal detects the SIB1 within a second preset time period (a second duration). For example, the second preset time period is determined by at least one of: a starting position of the second preset time period, a duration of the second preset time period, or an end position of the second preset time period.

In this embodiment of the present disclosure, the terminal continuously detects the SIB1 within the second preset time period. In this embodiment of the present disclosure, the terminal stops further detection of a SIB1 after detecting a SIB1 within the second preset time period.

In an embodiment, the starting position of the second preset time period is associated with at least one of: a WUS transmission position, or a third preset time period.

The terminal UE starts detecting the SIB1 immediately after transmitting the WUS. Alternatively, the terminal starts detecting the SIB1 after the third preset time period elapses from the WUS transmission. For example, the third preset time period is associated with at least one of: a predefined time period, a high-layer parameter, an SSB reception time, or an SSB transmission cycle.

In a practical implementation process, the third preset time period is a predefined duration, such as T milliseconds, or T slots, or T symbols, where T ≥0.

Alternatively, the third preset time period is configured by a high-layer parameter.

Alternatively, the third preset time period is associated with the SSB reception time. For example, the third preset time period corresponds to an interval from WUS transmission to the completion of an M-th SSB reception time. For example, the terminal starts detecting the SIB1 after the M-th SSB reception time subsequent to the WUS, where M> 1. For example, if M =1, the UE transmits the uplink wake up signal, detects the SSB after transmitting the uplink wake up signal, and starts detecting the SIB1 according to an indication of MIB information. For example, if M =2, the UE transmits the uplink wake up signal, detects the SSB after transmitting the uplink wake up signal, and starts detecting the SIB1 according to the indication of the MIB information after a reception time of a second SSB.

Alternatively, the third preset time period is associated with the SSB transmission cycle. For example, the third preset time period is M SSB transmission cycles, where M ≥1. For example, M =1. The terminal transmits the uplink wake up signal and starts detecting the SIB1 after the M SSB transmission cycles. For example, the terminal detects the SSB at least once within the M SSB transmission cycles. For example, the terminal detects at least the last SSB within the M SSB transmission cycles.

In an embodiment, the terminal starts detecting DCI 1_0 scrambled with SI-RNTI at time-frequency domain resource positions determined by CORESET 0 and search space 0, and detects the SIB1 according to an indication of DCI 1_0.

In Embodiment 4, the duration of the second preset time period is related to at least one of: an SIB1 cycle, an SIB1 repetition cycle, or a predefined time period.

The duration of the second preset time period is M SIB1 cycles, where M≥1.M is a predefined value, configured by a high-layer parameter, or determined by the UE. For example, the SIB1 cycle is a predefined value or configured by a high-layer parameter. For example, the SIB1 cycle is 160 ms.

The duration of the second preset time period is M SIB1 repetition cycles, where M≥1. M is a predefined value, configured by a high-layer parameter, or determined by the UE. For example, the SIB1 repetition cycle is a predefined value, such as 20 ms. For example, the SIB1 repetition cycle is the same as the SSB cycle. For example, the SIB1 repetition cycle is configured by a high-layer parameter. For example, optional values for the SIB1 repetition cycle are {5 ms, 10 ms, 20 ms, 40 ms, 80 ms, 160 ms}.

In this embodiment of the present disclosure, if the terminal fails to detect the SIB1 within the second preset time period, WUS transmission is performed again.

### Embodiment 5

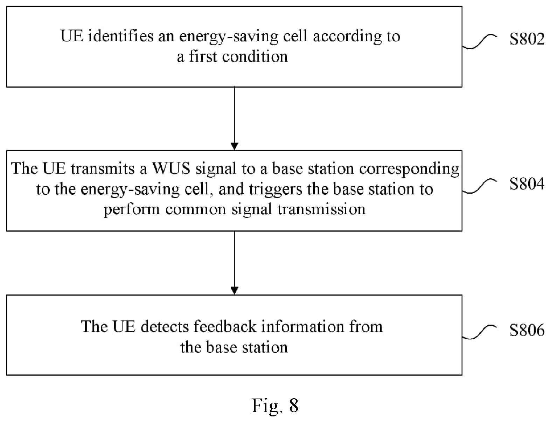

Embodiment 5 provides a common signal transmission method. In Embodiment 5, a terminal UE and a base station are used to describe the common signal transmission method. Steps of receiving feedback information after the UE transmits a WUS signal to the base station corresponding to an energy-saving cell are described. FIG. 8 is a flowchart of a common signal transmission method according to Embodiment 5 of the present disclosure. As shown in FIG. 8, the method includes the following steps:
Step S802: The UE identifies an energy-saving cell according to a first condition.
   In this embodiment of the present disclosure, the UE may perform, according to the first condition, energy-saving cell identification, and may also perform carrier identification according to the first condition.
Step S804: The UE transmits a WUS to a base station corresponding to the energy-saving cell, and triggers the base station to perform common signal transmission.
   In this embodiment of the present disclosure, the terminal UE identifies the energy-saving cell and transmits the uplink wake up signal on the energy-saving cell, and the uplink wake up signal includes an SIB 1 transmission request on the energy-saving cell. The uplink wake up signal is configured to trigger SIB1 transmission of the energy-saving cell.
Step S806: The UE detects feedback information from the base station.

In this embodiment of the present disclosure, the feedback information is carried by an MIB. The feedback information includes whether the uplink wake up signal is successfully transmitted or whether an SIB1 is successfully triggered.

In an embodiment, the feedback information is carried by a reserved bit in the MIB. For example, the reserved bit in the MIB is configured to indicate whether the uplink wake up signal is successfully transmitted or whether the SIB1 is successfully triggered. For example, the successful transmission of the uplink wake up signal or the successful triggering of the SIB1 means that on-demand SIB1 transmission is about to be performed on the energy-saving cell in response to the transmission of the uplink wake up signal.

In a practical implementation process, the reserved bit "A" in the MIB indicates that the current cell is a cell that supports on-demand SIB1 transmission, but no SIB1 is transmitted at present. The reserved bit "B" in the MIB indicates that the SIB1 is about to be transmitted. For example, A =1, and B =0; or A =0, and B =1. For example, if the bit is 1 before the uplink wake up signal is transmitted, and the bit is 0 after the uplink signal is transmitted, it indicates that the uplink wake up signal is successfully transmitted or the SIB1 is successfully triggered.

In an embodiment, the feedback information is carried by a subcarrier offset value in the MIB. For example, if the SSB subcarrier offset value in the MIB indicates that CORESET 0 exists, it indicates that the uplink wake up signal is successfully transmitted or the SIB1 is successfully triggered. If the SSB subcarrier offset value in the MIB indicates that CORESET 0 does not exist, it indicates that the uplink wake up signal transmission fails or SIB1 triggering fails.

In an embodiment, if CORESET 0 does not exist before the uplink wake up signal is transmitted, and CORESET 0 exists after the uplink signal is transmitted, it indicates that the uplink wake up signal is successfully transmitted or the SIB1 is successfully triggered.

In Embodiment 5, a case where the terminal detects an SSB after transmitting the uplink wake up signal is further described.

In this embodiment of the present disclosure, the terminal detects the SSB after transmitting the uplink wake up signal, and determines, according to MIB information in the SSB, whether the uplink wake up signal is successfully transmitted or whether the SIB1 is successfully triggered. For example, an update of the MIB information starts from a first SSB transmission time subsequent to the WUS. For example, the update of the MIB information starts from a next SSB cycle.

In this embodiment of the present disclosure, for the SSB and the SIB1 in the common signal, a DMRS associated with a PDSCH carrying SIB1 information has a quasi-co-location relationship with a DMRS associated with a PDCCH scheduling the PDSCH carrying the SIB1 information and/or an SSB. In an embodiment, a DMRS associated with the SIB1 triggered by the WUS / the PDSCH carrying the SIB1 information has quasi-co-location type A and type D characteristics with a DMRS associated with a PDCCH that schedules the SIB1 / the PDSCH carrying the SIB1 information and/or the SSB.

### Embodiment 6

Embodiment 6 provides determination of an SSB transmission mode on an energy-saving cell.

The energy-saving cell may include at least two SSB transmission modes. The SSB transmission mode includes at least one of: whether to transmit an SSB, an SSB transmission cycle, an SSB transmission beam, or an index. For example, one SSB transmission mode is that the SSB is transmitted with a 20 ms cycle. For another example, another SSB transmission mode is that the SSB is transmitted with a 160 ms cycle. For another example, yet another SSB transmission mode is no SSB transmission.

In an embodiment, the determination of the SSB transmission mode on the energy-saving cell is related to at least one of: SSB transmission mode trigger signaling, a timer, a predefined time period, a paging time, or a random access time.

In an embodiment, the SSB transmission mode on the energy-saving cell is updated in response to the SSB transmission mode trigger signaling.

In an embodiment, the SSB transmission mode on the energy-saving cell is updated in response to timer expiry.

In an embodiment, the energy-saving cell adopts a first SSB transmission mode within a predefined time period before the paging time, and adopts a second SSB transmission mode within a non-predefined time period.

In an embodiment, the energy-saving cell adopts the first SSB transmission mode within a predefined time period before the random access time, and adopts the second SSB transmission mode within a non-predefined time period.

In an embodiment, a duration of the predefined time period is determined by at least one of: predefinition, high-layer signaling or high-layer parameter configuration, SIB1 configuration, an SSB transmission mode adopted within the predefined time period, an SSB transmission cycle adopted within the predefined time period, or a default SSB transmission cycle. For example, the duration of the predefined time period is N SSB transmission cycles adopted within the predefined time period, where N is a predefined parameter. When the SSB transmission cycle adopted within the predefined time period is 5 ms and N =4, the duration of the predefined time period is 20 ms.

### Embodiment 7

In Embodiment 7, a response process after transmitting a WUS involved in this embodiment of the present disclosure is described in detail.

The WUS signal in this embodiment of the present disclosure is configured for at least one of: triggering transmission of a system information block (SIB) on an energy-saving cell; triggering transmission of a synchronization signal block (SSB) on the energy-saving cell; indicating an update of the SSB on the energy-saving cell; or indicating an update of a transmission mode of the SSB on the energy-saving cell.

In this embodiment of the present disclosure, in response to the uplink wake up signal (WUS), within a third preset time period, an SSB cycle remains unchanged, and a repetition cycle is R. For example, R is a minimum configurable cycle supported by the SSB. For example, R is 5 milliseconds. For example, the third preset time period includes at least one of: a first preset time period or a second preset time period.

In this embodiment of the present disclosure, in response to the uplink wake up signal (WUS), within the third preset time period, the SSB cycle is R. For example, R is a minimum configurable cycle supported by the SSB. For example, R is 5 milliseconds. For example, the third preset time period includes at least one of: a first preset time period or a second preset time period.

In a practical implementation process, for an SSB and CORESET multiplexing pattern 1, the repetition cycle of an SIB1 is 20 ms; and for an SSB and CORESET multiplexing pattern 2/3, the repetition cycle of the SIB1 is identical to the SSB cycle. When SIB1 transmission is triggered by the uplink wake up signal, adopting a short-cycle SSB transmission may allow the UE to quickly acquire the SIB1 or feedback information of the uplink wake up signal, which may reduce an initial access delay of the terminal. Meanwhile, centralized transmission can achieve an effect of energy saving for the base station. In addition, the shortened SSB cycle cannot influence the performance of newly accessing terminals, and a duration of a short cycle may be determined according to actual situations.

In this embodiment of the present disclosure, when the uplink wake up signal is configured for indicating that the SSB transmission mode on the energy-saving cell is updated, the base station adopts a designated SSB transmission mode in response to the uplink wake up signal.

In an embodiment, the designated SSB transmission mode is a default SSB transmission mode, or a predefined SSB transmission mode.

In a practical implementation process, the uplink wake up signal may carry an SSB transmission mode index. For example, the designated SSB transmission mode is an SSB transmission mode corresponding to the SSB transmission mode index carried by the uplink wake up signal.

In this embodiment of the present disclosure, the SSB transmission mode includes at least one of: whether to transmit an SSB, an SSB transmission cycle, an SSB transmission cycle scaling factor, an SSB repetition cycle, an index indication of an actually transmitted SSB, SSB transmit power, or SSB power offset.

In this embodiment of the present disclosure, a validity duration of the updated SSB transmission mode on the energy-saving cell includes at least one of: lasting N times; lasting for a predefined/configurable duration D; valid until expiry of a timer; valid until reception of a new indication.

In this embodiment of the present disclosure, an indication for updating the SSB transmission mode on the energy-saving cell is an SSB transmission mode preferred by the terminal. For example, the uplink wake up signal carries auxiliary information for SSB transmission mode update, assisting the base station in determining whether to perform SSB transmission mode update. The preference of the terminal may be determined according to actual situations, a terminal capability, a terminal type, service requirements, or the like.

The foregoing embodiments are merely preferred embodiments of the embodiments of the present disclosure, and are not used to limit the embodiments of the present disclosure. Various modifications and variations may be made to the embodiments of the present disclosure by those skilled in the art. Any modification, equivalent replacement, improvement, etc. made within the principle of the embodiments of the present disclosure shall fall within the scope of protection of the embodiments of the present disclosure.

## Claims

1. A common signal transmission method, applied to a first node, the method comprising:
determining, according to a first condition, whether a first cell is an energy-saving cell; and
transmitting by the first node, in a case where the first cell is the energy-saving cell, an uplink wake up signal (WUS) to a second node corresponding to the first cell to trigger the second node to perform common signal transmission.

2. The method according to claim 1, wherein a common signal comprises at least one of:
a system information block (SIB); or
a synchronization signal block (SSB).

3. The method according to claim 1, wherein the first condition comprises at least one of:
a bit value of a reserved field in a master information block (MIB) of the first cell;
a subcarrier offset value of a SSB in the MIB of the first cell;
whether the first node detects a SIB or SIB scheduling information in the first cell within a first preset time period;
whether the first cell is associated with an energy-saving cell identity;
whether the first cell is associated with an energy-saving cell list; or
whether the first cell is configured with configuration information of an uplink wake up signal (WUS).

4. The method according to claim 3, wherein the bit value of the reserved field in the MIB of the first cell is configured to indicate at least one of:
whether the first cell is the energy-saving cell;
whether the first cell is in an on-demand transmission state; or
whether the first cell allows the first node to camp thereon.

5. The method according to claim 3, wherein the subcarrier offset value of the SSB in the MIB of the first cell comprises at least one of:
in a case where the subcarrier offset value in the MIB for a first frequency range is equal to 30, or the subcarrier offset value in the MIB for a second frequency range is equal to 14, the first cell is the energy-saving cell;
in a case where the subcarrier offset value in the MIB for the first frequency range is less than 24, or the subcarrier offset value in the MIB for the second frequency range is less than 12, a control resource set zero exists; and
in a case where the subcarrier offset value in the MIB for the first frequency range is greater than 23 and less than 30, or the subcarrier offset value in the MIB for the second frequency range is equal to 12 or 13, the control resource set zero does not exist.

6. The method according to claim 1, wherein the uplink wake up signal (WUS) is further configured to trigger the second node to update a synchronization signal block (SSB) or update a transmission mode of the synchronization signal block (SSB).

7. The method according to claim 3, wherein the first preset time period is determined according to at least one of:
a predefined time period;
a time period configured by a radio resource control (RRC) parameter;
a time period determined according to a communication capability or a device type of the first node; or
a time period determined by the first node.

8. The method according to claim 3, wherein the determining, according to a first condition, whether a first cell is an energy-saving cell comprises:
determining, by the first node, that the first cell is an energy-saving cell in a case where the subcarrier offset value of the SSB in the MIB of the first cell indicates that a control resource set zero exists and the first node fails to detect the SIB or SIB scheduling information within the first preset time period.

9. The method according to claim 3, wherein the energy-saving cell identity or the energy-saving cell list is configured by at least one of:
master information block (MIB) information;
system information block (SIB) information;
radio resource control (RRC) signaling;
a core network; or
non-access stratum (NAS) control information.

10. The method according to claim 1, wherein after the first node transmits the uplink wake up signal (WUS) to the second node corresponding to the first cell, the method further comprises at least one of:
detecting, by the first node, a system information block (SIB) on the first cell within a second preset time period; or
detecting, by the first node, a synchronization signal block (SSB) on the first cell.

11. The method according to claim 10, further comprising:
re-transmitting, by the first node, the WUS to the second node in a case where the first node fails to detect the SIB within the second preset time period.

12. The method according to claim 10 or 11, wherein a start time point of the second preset time period comprises at least one of:
a time point when the first node completes transmission of the WUS to the second node;
a time point upon expiration of a third preset time period following completion of transmission of the WUS by the first node.

13. The method according to claim 12, wherein the third preset time period is determined according to at least one of:
a predefined time period;
a time period configured by radio resource control signaling;
a time period corresponding to an interval from a time point of completion of transmission of the WUS to a time point of completion of reception of an N-th SSB; or
a time period corresponding to a duration of N SSB transmission cycles, wherein N is a positive integer.

14. The method according to claim 10 or 11, wherein the second preset time period is determined according to at least one of:
a predefined time period,
a duration of M SIB cycles, or
a duration of M SIB repetition cycles, wherein M is a positive integer.

15. The method according to claim 1, wherein after the first node transmits the uplink wake up signal (WUS) to the second node corresponding to the first cell, the method further comprises:
receiving, by the first node, feedback information from the second node, wherein the feedback information is configured to indicate that the WUS is successfully transmitted or the common signal transmission is successfully triggered.

16. The method according to claim 15, wherein
the feedback information is carried in a master information block (MIB) of the first cell.

17. The method according to claim 16, wherein
the feedback information is carried in a reserved field of the MIB; or
the feedback information is carried in a subcarrier offset value of the MIB.

18. The method according to claim 2, wherein
the SIB is carried in a first physical downlink shared channel (PDSCH), wherein the first PDSCH is associated with a first demodulation reference signal (DMRS) and scheduled by a first physical downlink control channel (PDCCH) associated with a second DMRS and/or an SSB, and the first DMRS has a quasi-co-location relationship with the second DMRS and/or the SSB.

19. A common signal transmission method, applied to a second node, the method comprising:
transmitting and/or configuring a first condition, the first condition being configured to determine whether a first cell is an energy-saving cell; and
receiving an uplink wake up signal (WUS) from the first node in a case where the first cell is the energy-saving cell, the WUS being configured to trigger the second node to perform common signal transmission.

20. The method according to claim 19, wherein the common signal comprises at least one of:
a system information block (SIB); or
a synchronization signal block (SSB).

21. The method according to claim 19, wherein
the WUS is further configured to trigger the second node to update a synchronization signal block (SSB) or update a transmission mode of the synchronization signal block (SSB).

22. The method according to claim 19, wherein after the receiving an uplink wake up signal (WUS) from the first node, the method further comprises:
transmitting, by the second node, feedback information to the first node, wherein the feedback information is configured to indicate that the WUS is successfully transmitted or the common signal transmission is successfully triggered.

23. A computer-readable storage medium, having a computer program stored therein, wherein the computer program, when executed by a processor, causes the method according to any one of claims 1 to 22 to be implemented.

24. An electronic apparatus, comprising a memory, a processor, and a computer program stored on the memory and runnable on the processor, the processor, when executing the computer program, causing the method according to any one of claims 1 to 22 to be implemented.
